# EUROPEAN PATENT APPLICATION

(11) **EP 1 813 933 A1**
(43) Date of publication of application: **01.08.2007**
(21) Application number: 06013962.3
(22) Date of filing: 05.07.2006
(51) Int. Cl.: G01N 21/55

(54) **Surface plasmon resonance biosensor using coupled surface plasmons to decrease width of reflectivity dip**

(30) Priority: 27.01.2006 US 340541
(71) Applicant: Agilent Technologies, Inc., Santa Clara, CA 95051 (US)
(72) Inventor: Gruhlke, Russell W., San Jose CA 95134 (US)
(74) Representative: Schoppe, Fritz

(57) **Abstract**

A surface plasmon resonance apparatus (10) includes a prism (12); a dielectric layer (90) contacting one face (16) of the prism (12); a conducting layer (14) having a first surface contacting the dielectric layer (90) and a second surface to contact a sample (22) to be analyzed by the surface plasmon resonance apparatus (10); and a light source (18) emitting an incident light beam (26) having a wavelength λ₀ entering the prism (12) and incident on the face (16) of the prism (12) contacted by the dielectric layer (90) at an adjustable incident angle α relative to a normal to the face (16) of the prism (12) contacted by the dielectric layer (90). The conducting layer (14) has a thickness that enables generation of slightly asymmetric coupled surface plasmons when the incident angle α is equal to a resonance angle determined by the wavelength λ₀ of the incident light beam (26), an index of refraction (nₘ) of the conducting layer, and an index of refraction (nₛ) of the sample (22).

## Description

### BACKGROUND OF THE INVENTION

Surface plasmon resonance biosensors detect changes in a sample by detecting changes in the index of refraction of the sample, and thus do not require any fluorescent or other labeling of the sample. Accordingly, they are known as label-free biosensors.

In a typical surface plasmon resonance biosensor, a conducting layer is provided between a prism on one side and a sample on the other side. Light of a given wavelength is incident on the conducting layer at an angle through the prism. Almost all of the light will be reflected from the conducting layer except at a specific angle which depends on the index of refraction of the conducting layer and the index of refraction of the sample. At that angle, called the resonance angle, the photons in the incident light are converted to surface plasmons which travel along the interface between the conducting layer and the sample. This causes a sharp dip in the reflectivity of the conducting layer.

A change in the sample causes a change in the index of refraction of the sample, which causes a change in the resonance angle. By measuring the change in the resonance angle, the change in the index of refraction of the sample can be determined, which is indicative of the change in the sample.

### SUMMARY OF THE INVENTION

The invention relates to a surface plasmon resonance biosensor using coupled surface plasmons to decrease the width of a reflectivity dip and thereby increase the sensitivity of the surface plasmon resonance biosensor.

### BRIEF DESCRIPTION OF THE DRAWINGS

Embodiments in accordance with the invention are described below in conjunction with the accompanying drawings of which:
FIG. 1 shows a surface plasmon resonance biosensor in accordance with the invention;
FIG. 2 shows a reflectivity dip in the surface plasmon resonance biosensor of FIG. 1;
FIG. 3 is a graph of energy versus wavenumber showing a relationship between light radiative states or plane wave states lying within a light cone and surface plasmon states lying on single-interface surface plasmon dispersion curves;
FIG. 4 shows an embodiment in accordance with the invention in which single-interface surface plasmons are generated;
FIG. 5 is a graph of energy versus wavenumber showing a relationship between light radiative states or plane wave states lying within a light cone and surface plasmon states lying on long-range coupled surface plasmon (LRCSP) dispersion curves and short-range coupled surface plasmon (SRCSP) dispersion curves;
FIG. 6 shows an embodiment in accordance with the invention having a dielectric-conducting layer-dielectric configuration in which long-range coupled surface plasmons (LRCSPs) and possibly short-range coupled surface plasmons (SRCSPs) are generated;
FIG. 7 shows an embodiment in accordance with the invention having a conducting layer-dielectric-conducting layer configuration in which LRCSPs and possibly SRCSPs are generated;
FIG. 8 shows an embodiment in accordance with the invention in which slightly asymmetric LRCSPs and possibly slightly asymmetric SRCSPs are generated; and
FIG. 9 shows an embodiment in accordance with the invention in which a coupled mode in which a single-interface surface plasmon is coupled with a waveguide mode is generated.

### DETAILED DESCRIPTION OF THE EMBODIMENTS

Reference will now be made in detail to embodiments in accordance with the invention, examples of which are illustrated in the accompanying drawings, wherein like reference numerals refer to the like elements throughout. The embodiments in accordance with the invention are described below.

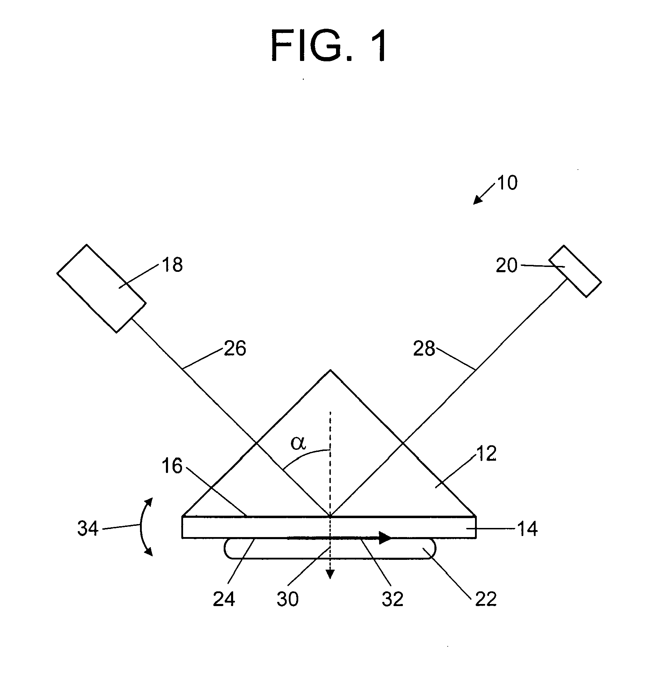

FIG. 1 shows a surface plasmon resonance biosensor 10 in accordance with the invention which includes a prism 12, a conducting layer 14 contacting one face 16 of the prism 12, a light source 18, and a detector 20. A sample 22 contacts the conducting layer 14 and forms a conducting layer/sample interface 24. The light source 18 emits a collimated monochromatic incident light beam 26 having a wavelength λ₀. The light source 18 may be a laser, for example. The incident light beam 26 enters the prism 12 and is incident on the face 16 of the prism 12 contacting the conducting layer 14 at an incident angle α where it is reflected to form a reflected light beam 28 which is detected by the detector 20.

When the incident light beam 26 is reflected from the face 16 of the prism 12, an evanescent wave 30 is generated which propagates through the conducting layer 14 into the sample 22. At a specific incident angle α, called the resonance angle, which depends on the wavelength λ₀ of the incident light beam 26, the index of refraction of the conducting layer 14, and the index of refraction of the sample 22, the evanescent wave 30 generates surface plasmons 32 which propagate along the conducting layer/sample interface 24. The resonance angle is always greater than the critical angle at which total internal reflection occurs. At the resonance angle, almost no light is reflected from the face 16 of the prism 12 because most of the photons in the incident light beam 26 have been converted to the surface plasmons 32. At all other incident angles α, almost all of the photons in the incident light beam 26 are reflected. Thus, the detector 20 will detect a sharp dip in the reflectivity of the face 16 of the prism 12 at the resonance angle. The resonance angle can be determined by rotating the prism 12 relative to the incident light beam 26 as indicated by the arrow 34 while monitoring the output of the detector 20.

A change in the sample 22 causes a change in the index of refraction of the sample 22, which causes a change in the resonance angle. Since the resonance angle depends on the wavelength λ₀ of the incident light beam 26, the index of refraction of the conducting layer 14, and the index of refraction of the sample 22, and the only variable that changes is the index of refraction of the sample 22, by measuring the change in the resonance angle, the change in the index of refraction of the sample 22 can be determined, which is indicative of the change in the sample 22. It is possible to detect changes in the index of refraction of the sample 22 out to five or six decimal places using this technique.

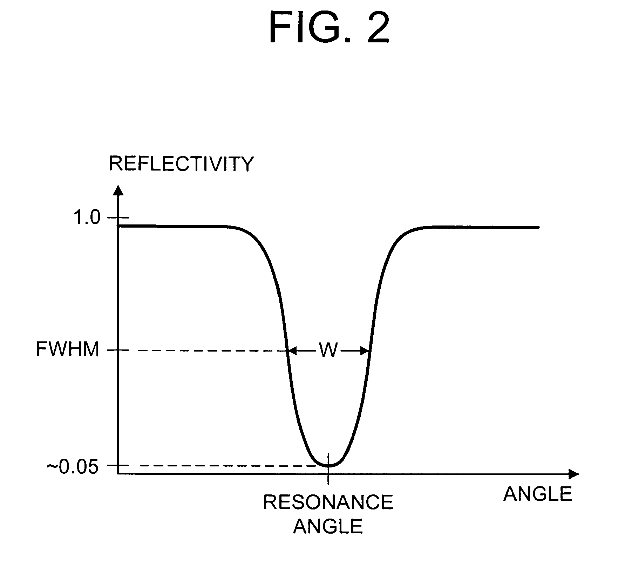

FIG. 2 shows an example of how the reflectivity varies with the incident angle α as the prism 12 is rotated through the resonance angle. The reflectivity is almost 1.0 until the incident angle α approaches the resonance angle, and then dips sharply to about 0.05 at the resonance angle. The full-width half-maximum (FWHM) of the reflectivity dip is typically on the order of about 1° to 2°. The reflectivity is typically measured on the steepest part of the reflectivity dip.

The sensitivity of the surface plasmon resonance biosensor 10 is determined in large part by the width of the reflectivity dip. As the reflectivity dip becomes narrower or sharper, the change in reflectivity becomes more sensitive to the incident angle α, and thus the precision of measurement is increased. The width of the reflectivity dip is determined primarily by surface plasmon absorption losses in the conducting layer 14, with the width of the reflectivity dip decreasing as the surface plasmon absorption losses in the conducting layer 14 decrease. Therefore, if there were a way to decrease the surface plasmon absorption losses in the conducting layer 14, this would decrease the width of the reflectivity dip and thereby increase the precision of measurement of the surface plasmon resonance biosensor 10.

The conducting layer 14 should be made of a conductor that generates surface plasmons in the visible or infrared light ranges at a resonance angle that is convenient for observation purposes. The conducting layer 14 must be made of a pure conductor because oxides, sulfides, and other compounds formed by atmospheric exposure or reaction with the sample 22 interfere with the generation of surface plasmons. One example of a suitable conductor for the conducting layer 14 is a metal. Suitable candidates for a metal to use for the conducting layer 14 with respect to their optical properties include Au, Ag, Cu, Al, Na, and In. However, In is too expensive, Na is too reactive, Cu and Al produce a reflectivity dip which is too broad, and Ag is too susceptible to oxidation, although Ag has the lowest absorption losses for surface plasmons. That leaves Au as the most practical choice, even though it has higher absorption losses for surface plasmons than does Ag.

A surface plasmon can be thought of as a very highly attenuated guided wave that is constrained to follow a conducting layer/dielectric interface, and is a combined oscillation of the electromagnetic field and the surface charges of the conducting layer. For the purposes of this discussion, the conducting layer/dielectric interface is the conducting layer/sample interface 24 in FIG. 1. A surface plasmon is not a light radiative state or a plane wave because its electric field profile decays exponentially away from the conducting layer/dielectric interface. The electric field of a surface plasmon is called an evanescent wave.

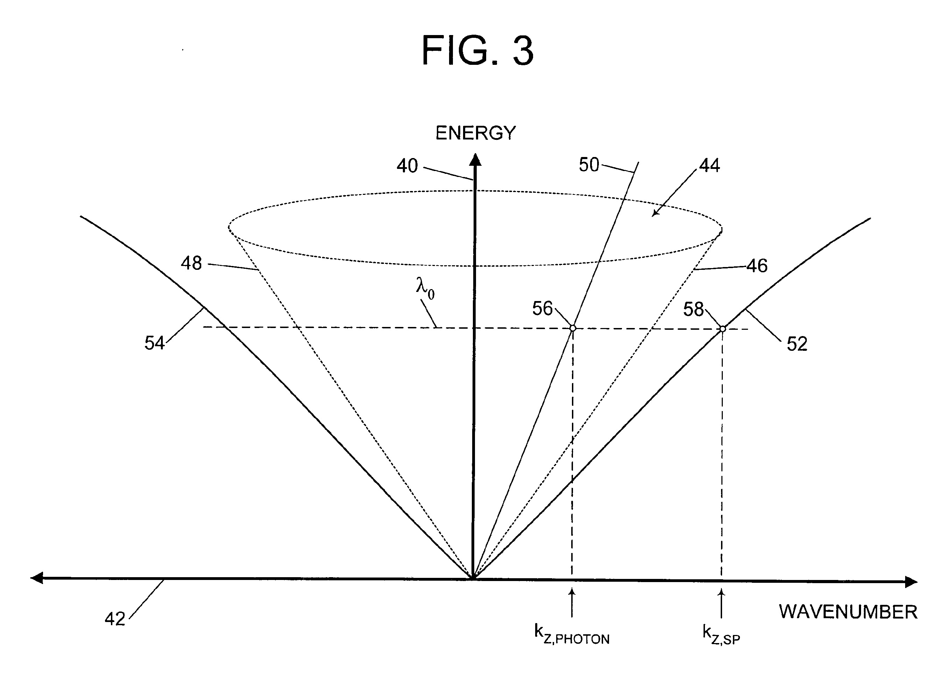

FIG. 3 shows a graph of energy plotted on a vertical energy axis 40 versus wavenumber k_{z} plotted on a horizontal wavenumber axis 42. The wavenumber k_{z} is a component of a wavenumber k = 2π/λ. parallel to some interface along the Z axis. For the purposes of this discussion, the interface along the Z axis is the conducting layer/sample interface 24 in FIG. 1.

Each point in the graph in FIG. 3 represents a photonic state where the properties of that state are its energy E (or wavelength λ) and its wavenumber k (or momentum p). Energy E = hc/λ, where h is Planck's constant and c is the speed of light, and thus E is inversely proportional to wavelength λ. Accordingly, as energy E increases along the energy axis 40 in FIG. 3, wavelength λ decreases. Momentum p = ℏk, where ℏ or "h bar" is the reduced Planck's constant, i.e., Planck's constant h divided by 2π, and thus momentum p is directly proportional to wavenumber k. Accordingly, as wavenumber k_{z} increases along the wavenumber axis 22 in FIG. 3, momentum p also increases.

A light radiative state or a plane wave state, that is, light propagating in free space, must always lie within a light cone 44 shown in FIG. 3. The light cone 44 represents all possible light radiative states or plane wave states. The right half of the light cone 44 on the right side of the energy axis 40 represents all possible light radiative states or plane wave states of photons that propagate in a forward direction, and the left half of the light cone 44 on the left side of the energy axis 40 represents light radiative states or plane wave states of photons that propagate in a backward direction. The energy axis 40 extending through the center of the light cone 44 represents light radiative states or plane wave states of photons that propagate normal to the conducting layer/sample interface 24. A diagonal line 46 represents light radiative states or plane wave states of photons that propagate parallel to the conducting layer/sample interface 24 in the forward direction, and a diagonal line 48 represents light radiative states or plane wave states of photons that propagate parallel to the conducting layer/sample interface 24 in the backward direction. A diagonal line 50 represents light radiative states or plane wave states of photons that propagate at an incident angle α relative to the conducting layer/sample interface 24 in the forward direction.

All possible surface plasmon states of surface plasmons that propagate forward along the conducting layer/sample interface 24 are represented by a surface plasmon dispersion curve 52 to the right of the energy axis 40, and all possible surface plasmon states of surface plasmons that propagate backward along the conducting layer/sample interface 24 are represented by a surface plasmon dispersion curve 54 to the left of the energy axis 40.

In order for a light radiative state to couple with a surface plasmon state, both energy and momentum must be conserved.

In order for energy to be conserved, a light radiative state 56 of a photon propagating at the incident angle α relative to the conducting layer/sample interface 24 in the forward direction having the wavelength λ₀ of the incident light beam 26 must couple with a surface plasmon state 58 having the same wavelength λ₀.

However, the wavenumber k_{Z.SP} (and thus the momentum p) of any surface plasmon state on the surface plasmon dispersion curve 52 on the right side of the energy axis 40 in FIG. 3 will always be greater than the wavenumber k_{Z.PHOTON} (and thus the momentum p) of any light radiative state having the same energy E (or wavelength λ) because the surface plasmon dispersion curve 52 lies outside the light cone 44. The same situation applies on the left side of the energy axis 40. Thus, any surface plasmon state is a nonradiative state and under normal circumstances can never be coupled with a light radiative state because momentum would not be conserved. Accordingly, under normal circumstances, the light radiative state 56 cannot couple with the surface plasmon state 58.

However, this inability of the light radiative state 56 to couple with the surface plasmon state 58 is overcome in the surface plasmon resonance biosensor 10 by prism coupling provided by the prism 12 which works as follows. When the incident light beam 26 enters the prism 12, the wavenumber k_{Z.PHOTON} (and thus the momentum) of the photons in the incident light beam 26 having the wavelength λ₀ is multiplied by the index of refraction nₚ of the prism 12. This widens the light cone 44 in FIG. 3 so it envelops the surface plasmon dispersion curves 52 and 54, making it possible for the light radiative state 56 to couple with the surface plasmon state 58 when the incident light beam 26 is incident on the face 16 of the prism 12 at an incident angle α equal to the resonance angle, at which time nₚK_{Z,PHOTON} = k_{Z.SP}, such that momentum is conserved.

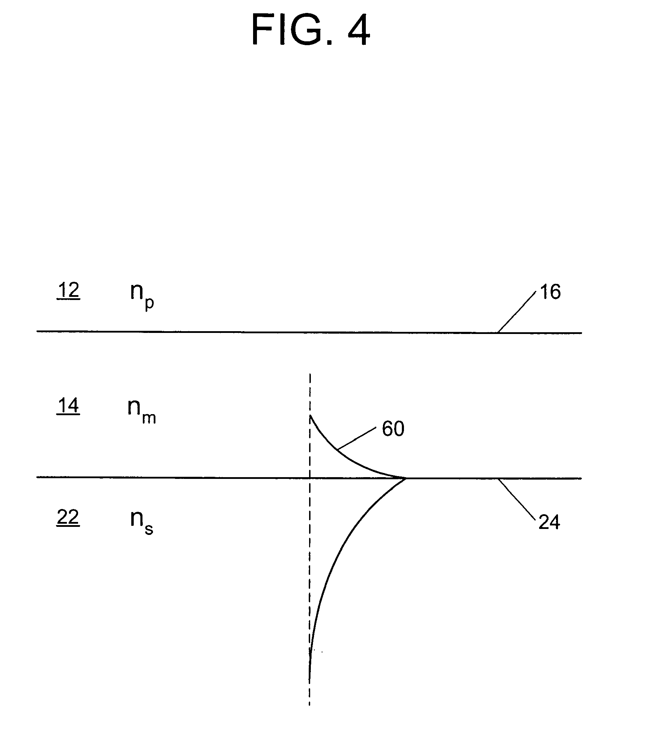

FIG. 4 shows an embodiment in accordance corresponding to a portion of FIG. 1 where nₚ is the index of refraction of the prism 12, nₘ is the index of refraction of the conducting layer 14, and nₛ is the index of refraction of the sample 22. If the conducting layer 14 is at least 100 nm thick, a surface plasmon having an electric field profile 60 will be generated at the conducting layer/sample interface 24 at the resonance angle. The vertical dashed line represents an electric field of zero. This type of surface plasmon is known as a single-interface surface plasmon, and the surface plasmon dispersion curves 52 and 54 in FIG. 3 are single-interface surface plasmon dispersion curves.

The electric field profile 60 decays exponentially away from the conducting layer/sample interface 24, with the portion extending into the conducting layer 14 decaying faster than the portion extending into the sample 22 because the absorption losses in the conducting layer 14 are higher than the absorption losses in the sample 22.

As discussed above, if there were a way to decrease the surface plasmon absorption losses in the conducting layer 14, this would decrease the width of the reflectivity dip and thereby increase the precision of measurement of the surface plasmon resonance biosensor 10. One way to do this is to generate long-range coupled surface plasmons.

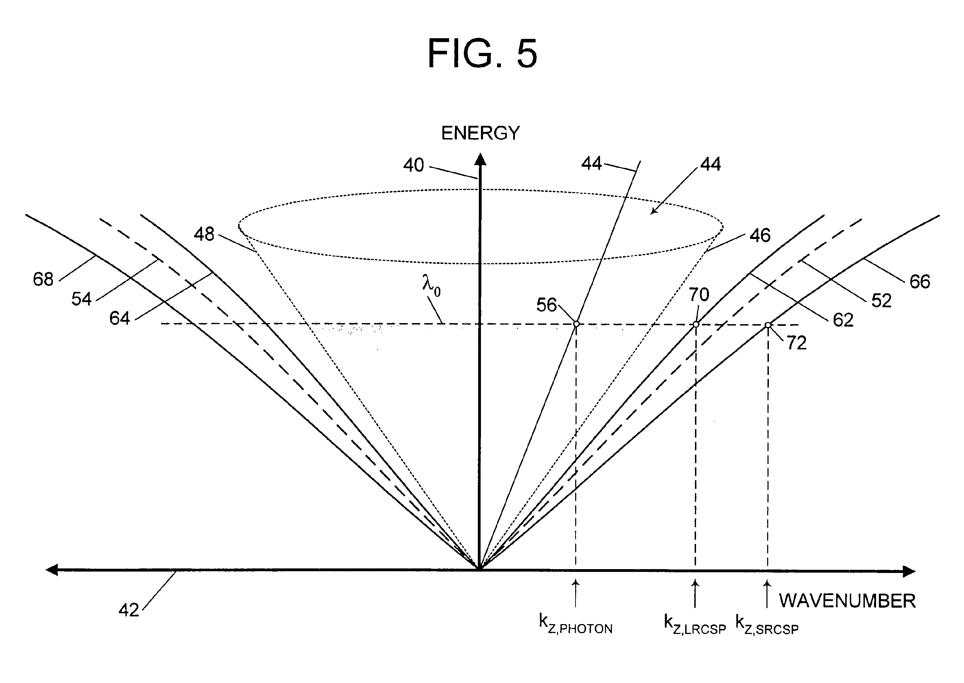

As the thickness of the conducting layer 14 decreases below about 100 nm, the single-interface surface plasmon dispersion curves 52 and 54 in FIG. 3 split into long-range coupled surface plasmon (LRCSP) dispersion curves 62 and 64 and short-range coupled surface plasmon (SRCSP) dispersion curves 66 and 68 as shown in FIG. 5. As the thickness of the conducting layer 14 continues to decrease, the LRCSP dispersion curves 62 and 64 continue to rotate toward the light cone 44, and the SRCSP dispersion curves 66 and 68 continue to rotate away from the light cone 44 at a faster rate than the LRCSP dispersion curves 62 and 64 rotate toward the light cone 44.

The LRCSP dispersion curves 62 and 64 and the SRCSP dispersion curves 66 and 68, like the single-interface surface plasmon dispersion curves 52 and 54, are outside the light cone 44. Accordingly, under normal circumstances, the light radiative state 56 having the wavelength λ₀ and the wavenumber k_{Z,PHOTON} cannot couple with a LRCSP state 70 having the wavelength λ₀ and a wavenumber K_{Z,LRCSP}, or with a SRCSP state 72 having the wavelength λ₀ and a wavenumber k_{Z,SRCSP}.

However, the prism coupling provided by the prism 12 widens the light cone 44 as discussed above so it envelops at least the LRCSP dispersion curves 62 and 64, and perhaps even the SRCSP dispersion curves 66 and 68, making it possible for the light radiative state 56 to couple with the LRCSP state 70 when the incident light beam 26 is incident on the face 16 of the prism 12 at an incident angle α equal to the resonance angle, at which time nₚk_{Z,PHOTON} = k_{Z,LRCSP}, such that momentum is conserved, or perhaps even to couple with the SRCSP state 72 when the incident light beam 26 is incident on the face 16 of the prism 12 at an incident angle α equal to the resonance angle, at which time nₚk_{Z,PHOTON} = k_{Z,SRCSP}, such that momentum is conserved.

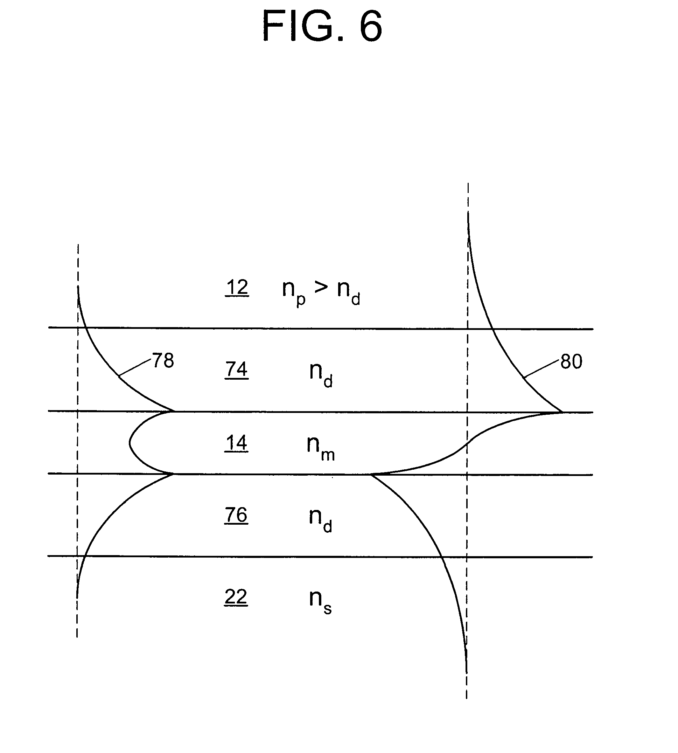

FIG. 6 shows an embodiment in accordance with the invention in which a first dielectric layer 74 is disposed between the prism 12 and the conducting layer 14, and a second dielectric layer 76 made of the same dielectric material as the first dielectric layer 74 is disposed between the conducting layer 14 and the sample 22. The index of refraction nₚ of the prism 12 is greater than the index of refraction n_{d} of the first dielectric layer 74 and the second dielectric layer 76. The thickness of the conducting layer 14 is less than about 100 nm. If the conducting layer 14 is made of Au, the thickness is preferably about 50 nm. The thickness of the first dielectric layer 74 and the second dielectric layer 76 is less than about the wavelength λ₀ of the incident light beam 26. The first dielectric layer 74 and the second dielectric layer 76 may be made of SiO₂ or any other suitable dielectric material.

The conducting layer 14 is thin enough so that the electric field of a surface plasmon formed at the interface between the conducting layer 14 and the first dielectric layer 74 will overlap and couple with the electric field of a surface plasmon formed at the interface between the conducting layer 14 and the second dielectric layer 76 to form a coupled surface plasmon which can have either a symmetric field profile 78 or an anti-symmetric field profile 80.

In the symmetric electric field profile 78, the electric fields of the two surface plasmons have the same polarity in the conducting layer 14, and thus add together in the conducting layer 14 so that the electric field in the conducting layer 14 never goes to zero. This effectively pulls the electric field of the coupled surface plasmon into the conducting layer 14, which increases the overall absorption losses of this coupled surface plasmon as compared to the single-interface surface plasmon shown in FIG. 4 because the absorption losses are substantially higher in the conducting layer 14 than they are in the first dielectric layer 74 and the second dielectric layer 76. The increase in absorption losses decreases the lifetime of the coupled surface plasmon, which reduces the distance the coupled surface plasmon can propagate before being absorbed. For this reason, a coupled surface plasmon with the symmetric electric field profile 78 is called a short-range coupled surface plasmon or SRCSP. SRCSP states lie on the SRCSP dispersion curves 66 and 68 in FIG. 5.

In the anti-symmetric electric field profile 80, the electric fields of the two surface plasmons have opposite polarities in the conducting layer 14, and thus subtract from one another in the conducting layer 14 so that the electric field in the conducting layer 14 goes to zero. This effectively pushes the electric field of the coupled surface plasmon out of the conducting layer 14 into the first dielectric layer 74 and the second dielectric layer 76, which decreases the overall absorption losses of this coupled surface plasmon as compared to the single-interface surface plasmon shown in FIG. 4 because the absorption losses are substantially lower in the first dielectric layer 74 and the second dielectric layer 76 than they are in the conducting layer 14. The decrease in absorption losses increases the lifetime of the coupled surface plasmon, which increases the distance the coupled surface plasmon can propagate before being absorbed. For this reason, a coupled surface plasmon with the anti-symmetric electric field profile 80 is called a long-range coupled surface plasmon or LRCSP. LRCSP states lie on the LRCSP dispersion curves 62 and 64 in FIG. 5.

SRCSPs typically have higher absorption losses than single-interface surface plasmons, and thus will produce a wider reflectivity dip than single-interface surface plasmons. In contrast, LRCSPs typically have lower absorption losses than single-interface surface plasmons, and thus will produce a narrower reflectivity dip than single-interface surface plasmons. Accordingly, it is desirable to generate as many LRCSPs and as few SRCSPs as possible to obtain as narrow a reflectivity dip as possible. This can be done by selecting the indices of refraction nₚ, n_{d}, and nₘ so that the light cone 44 in FIG. 5 widens enough to envelop the LRCSP dispersion curves 62 and 64 but not enough to envelop the SRCSP dispersion curves 66 and 68.

The width of the reflectivity dip can be decreased by increasing the lifetime of the LRCSPs and SRCSPs, which can be done by decreasing the thickness of the conducting layer 14 because a thinner conducting layer 14 will have lower absorption losses. The conducting layer 14 is typically formed by depositing a conductor on a dielectric substrate, such as the first dielectric layer 74 or the second dielectric layer 76 in FIG. 6. However, for certain conductors, it is impossible to form the conducting layer 14 to be thinner than about 15 nm because below that thickness, conductor atoms deposited on the dielectric substrate cluster and form island films. These island films are rough and would scatter the incident light beam 26, which would broaden the reflectivity dip and negate any narrowing of the reflectivity dip due to a thinner conducting layer 14. Examples of conductors for which this occurs are Au and Ag. However, this problem can be overcome by using a conducting layer-dielectric-conducting layer configuration, rather than the dielectric-conducting layer-dielectric configuration shown in FIG. 6.

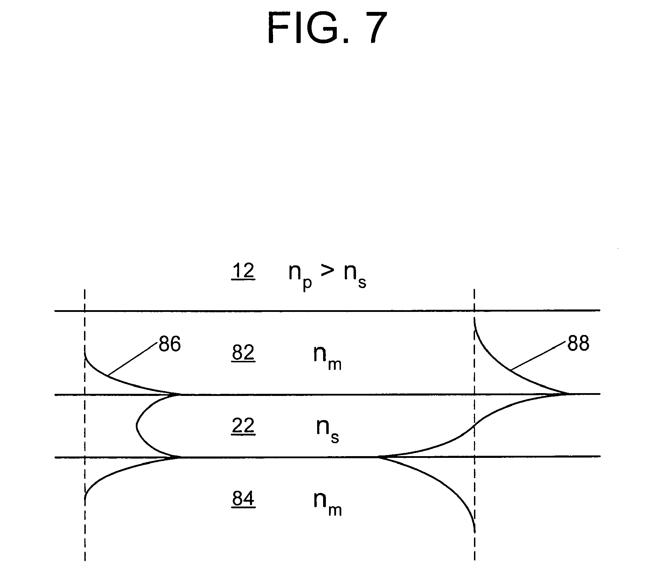

FIG. 7 shows an embodiment in accordance with the invention in which a first conducting layer 82 is disposed between the prism 12 and the sample layer 22, and a second conducting layer 84 made of the same conductor as the first conducting layer 82 is disposed on the other side of the sample 22 from the first conducting layer 82. The index of refraction nₚ of the prism 12 is greater than the index of refraction nₛ of the sample 22, which acts as a dielectric in a conducting layer-dielectric-conducting layer configuration. The thickness of the first conducting layer 82 should be about 50 nm or less to enable the evanescent wave 30 shown in FIG. 1 which is generated by the reflected incident light beam 26 to penetrate through the first conducting layer 82 into the sample 22 so it can generate surface plasmons. The second conducting layer 84 may be much thicker, for example, about 1000 nm. This configuration enables the thickness of the sample 22 to be as small as about 5 nm, and is substantially equivalent to using a 5 nm thick conducting layer 14 in the configuration of FIG. 6, which is impossible because of the island films formed at thicknesses of about 15 nm or less as discussed above.

The configuration in FIG. 7 generates SRCSPs having an electric field profile 86 and LRCSPs having an electric field profile 88. As in the case of FIG. 6, it is desirable to generate as many LRCSPs and as few SRCSPs as possible to obtain as narrow a reflectivity dip as possible. This can be done by selecting the indices of refraction nₚ and nₘ so that the light cone 44 in FIG. 5 widens enough to envelop the LRCSP dispersion curves 62 and 64 but not enough to envelop the SRCSP dispersion curves 66 and 68.

The width of the reflectivity dip may be further decreased by using an asymmetric geometry to generate slightly asymmetric LRCSPs which can have a substantially longer lifetime than symmetric LRCSPs generated with a symmetric geometry as shown in FIGS. 6 and 7. This substantially longer lifetime results in the slightly asymmetric LRCSPs having a propagation length which may exceed the propagation length of symmetric LRCSPs by up to three orders of magnitude. Symmetric geometry refers to the fact that the first dielectric layer 74 and the second dielectric layer 76 on both sides of the conducting layer 14 in FIG. 6 are made of the same material, and the first conducting layer 82 and the second conducting layer 84 on both sides of the sample 22 in FIG. 7 are made of the same conductor.

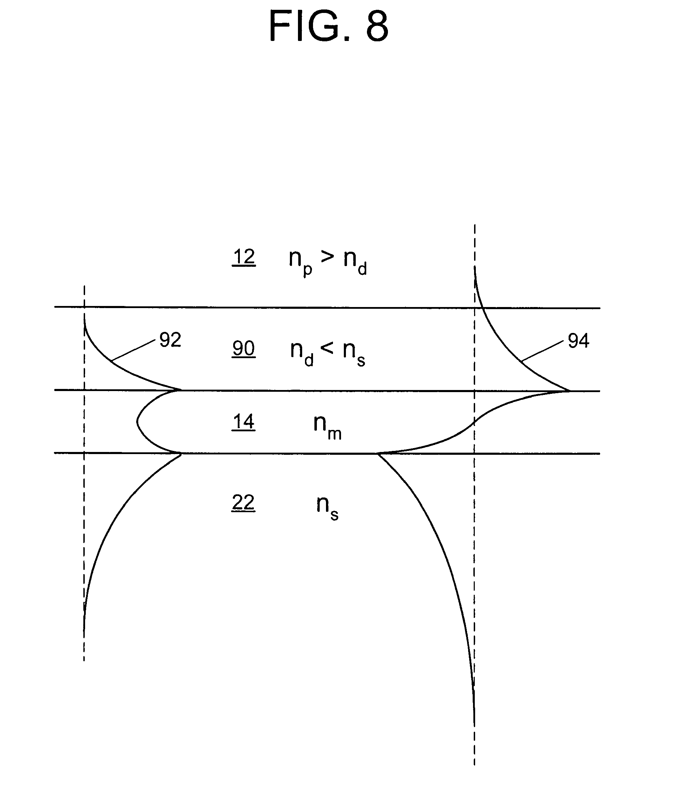

FIG. 8 shows an embodiment in accordance with the invention in which a dielectric layer 90 is disposed between the prism 12 and the conducting layer 12, and the sample 22 is disposed on the other side of the conducting layer 12. The index of refraction nₚ of the prism 12 is greater than the index of refraction n_{d} of the dielectric layer 90, and the index of refraction n_{d} of the dielectric layer 90 is less than the index of refraction nₛ of the sample 22.

The configuration in FIG. 8 generates slightly asymmetric SRCSPs having an electric field profile 92 and slightly asymmetric LRCSPs having an electric field profile 94.
The electric fields of the slightly asymmetric SRCSPs and the slightly asymmetric LRCSPs are pushed further into the sample 22 than they are into the dielectric layer 90 due to the index of refraction nₛ of the sample 22 being greater than the index of refraction n_{d} of the dielectric layer 90. As in the case of FIGS. 6 and 7, it is desirable to generate as many slightly asymmetric LRCSPs and as few slightly asymmetric SRCSPs as possible to obtain as narrow a reflectivity dip as possible. This can be done by selecting the indices of refraction nₚ, n_{d}, and nₘ so that the light cone 44 in FIG. 5 widens enough to envelop slightly asymmetric LRCSP dispersion curves similar to the LRCSP dispersion curves 62 and 64 in FIG. 5 but not enough to envelop slightly asymmetric SRCSP dispersion curves similar to the SRCSP dispersion curves 66 and 68 shown in FIG. 5.

Another way to decrease the absorption losses in the conducting layer 14 and thereby decrease the width of the reflectivity dip is to generate a coupled mode in which a single-interface surface plasmon is coupled with a waveguide mode.

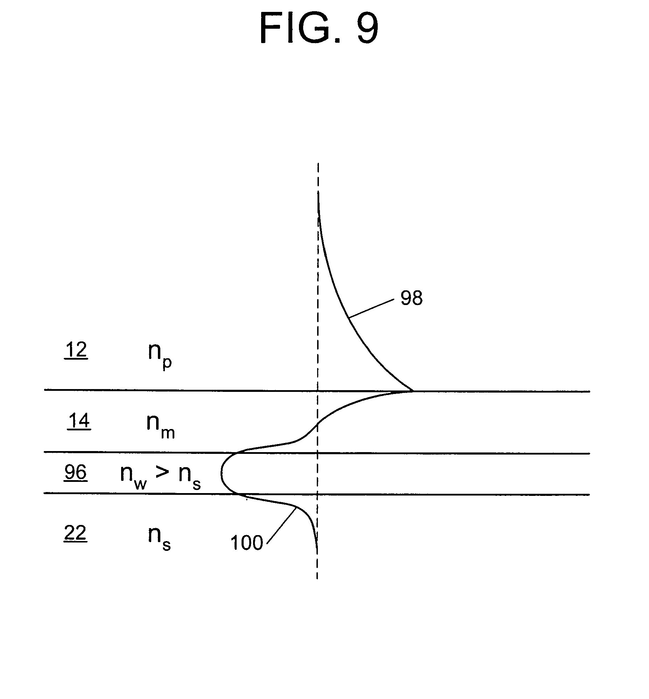

FIG. 9 shows an embodiment in accordance with the invention in which a dielectric waveguide layer 96 is disposed between the conducting layer 14 and the sample 22, and the prism 12 is disposed on the other side of the conducting layer 14. The index of refraction n_{w} of the dielectric waveguide layer 96 is greater than the index of refraction nₛ of the sample 22. The configuration in FIG. 9 generates a single-interface surface plasmon having an electric field profile 98 propagating along an interface between the prism 12 and the conducting layer 14 which couples with a waveguide mode having an electric field profile 100 propagating in the dielectric waveguide layer 96. Most of the combined electric field of the coupled mode is in the waveguide dielectric layer 96 which has very low absorption losses, thereby decreasing the width of the reflectivity dip.

Although a few embodiments in accordance with the invention have been shown and described, it would be appreciated by those skilled in the art that changes may be made in these embodiments without departing from the principles and spirit of the invention, the scope of which is defined in the claims and their equivalents.

## Claims

1. A surface plasmon resonance apparatus (10) comprising:
a prism (12);
a dielectric layer (90) contacting one face (16) of the prism (12);
a conducting layer (14) having a first surface contacting the dielectric layer (90) and a second surface to contact a sample (22) to be analyzed by the surface plasmon resonance apparatus (10); and
a light source (18) emitting an incident light beam (26) having a wavelength λ₀ entering the prism (12) and incident on the face (16) of the prism (12) contacted by the dielectric layer (90) at an adjustable incident angle α relative to a normal to the face (16) of the prism (12) contacted by the dielectric layer (90);
wherein the conducting layer (14) has a thickness that enables generation of slightly asymmetric coupled surface plasmons when the incident angle α at which the incident light beam (26) is incident on the face (16) of the prism (12) contacted by the dielectric layer (90) is equal to a resonance angle determined by the wavelength λ₀ of the incident light beam (26), an index of refraction (nₘ) of the conducting layer, and an index of refraction (nₛ) of the sample (22).

2. The apparatus of claim 1, wherein the coupled surface plasmons have an electric field (92, 94) that at least extends from the conducting layer (14) into the sample (22).

3. The apparatus of claim 1, wherein the conducting layer (14) is made of Au and is about 50 nm thick.

4. The apparatus of claim 1, wherein an index of refraction (nₚ) of the prism (12) is greater than an index of refraction (n_{d}) of the dielectric layer (90); and
wherein the index of refraction (n_{d}) of the dielectric layer (90) is less than the index of refraction (nₛ) of the sample (22).

5. The apparatus of claim 1, wherein an index of refraction (nₚ) of the prism (12), the index of refraction (nₘ) of the conducting layer (14), and the index of refraction (nₛ) of the sample (22) are selected so that the slightly asymmetric coupled surface plasmons that are generated comprise substantially all slightly asymmetric long-range coupled surface plasmons and substantially no slightly asymmetric short-range coupled surface plasmons.
